# EUROPÄISCHE PATENTSCHRIFT

(11) **EP 2 776 687 B1**
(45) Veröffentlichungstag und Bekanntmachung des Hinweises auf die Patenterteilung: **01.06.2016**
(21) Anmeldenummer: 12786880.0
(22) Anmeldetag: 31.10.2012
(51) Int. Cl.: F01N 3/20, F02M 53/04

(54) **DOSIERMODUL**
METERING MODULE
MODULE DE DOSAGE

(30) Priorität: 09.11.2011 DE 102011086017
(43) Veröffentlichungstag der Anmeldung: 17.09.2014
(73) Patentinhaber: Robert Bosch GmbH, 70442 Stuttgart (DE)
(72) Erfinder: KIONTKE, Martin, 71254 Ditzingen (DE); POHL, Stephan, 71701 Schwieberdingen (DE); KNITTEL, Achim, 71254 Ditzingen (DE)
(86) Internationale Anmeldenummer: PCT/EP2012/071546
(87) Internationale Veröffentlichungsnummer: WO 2013/068288

(56) Entgegenhaltungen:
- EP-A1- 1 662 108
- EP-A1- 2 503 122
- DE-A1- 4 436 397
- JP-A- 9 096 212

## Beschreibung

### Stand der Technik

In modernen Kraftfahrzeugen mit selbstzündenden Brennkraftmaschinen müssen aufgrund der sich stetig verschärfenden Abgasgrenzwerte unter anderem Stickoxide (NOx) im Abgasstrom reduziert werden. Ein hierfür zum Einsatz kommendes Verfahren ist die katalytische Reduktion (s.g. "SCR-Verfahren = Selective Catalytic Reduction") mittels eines NOx-Reduktionskatalysators. Im Zuge dieser Abgasnachbehandlung wird ein Reduktionsmittel mit Hilfe einer Pumpe aus einem Vorratsbehälter bis zu einem Dosiermodul gefördert, das im Bereich des Abgasstranges des Verbrennungsmotors lokalisiert ist. Mittels des Dosiermoduls wird intermittierend eine genau definierte Menge des Reduktionsmittels in den Abgasstrom stromaufwärts des NOx-Reduktionskatalysators gegeben. Als Reduktionsmittel kommt im Allgemeinen eine Harnstoff-Wasserlösung (s.g. "AdBlue^{®}") zum Einsatz.

Um das Dosiermodul so nah wie möglich am Abgasstrom positionieren zu können, wird der untere Abschnitt des Dosiermoduls mit der darin befindlichen Einspritzdüse für das Reduktionsmittel aktiv gekühlt. Hierdurch ist sichergestellt, dass auch bei einer abgasnahen Anordnung des Dosiermoduls im Bereich der Einspritzdüse eine Temperatur von 120 °C nicht überschritten wird. Ein Nachteil dieser Ausführungsform liegt in der der fehlenden Kühlung der übrigen Baugruppen des Dosiermoduls, in dem üblicherweise der Betätigungsmagnet für das Einspritzventil angeordnet ist und der Anschluss des Dosiermoduls mittels einer elektrischen Steckverbindung erfolgt. Aufgrund der lediglich partiellen Kühlung ist ein solches Dosiermodul nicht für Umgebungstemperaturen von mehr als 160 °C geeignet, da ansonsten die Steckverbindung und/oder die Spule des Betätigungsmagneten dauerhaften Schaden nehmen können.

Aus der DE 44 36 397 A1 ist eine Einrichtung zum Nachbehandeln von Abgasen bekannt. Hierbei wird ein Reduktionsmittel mit Hilfe einer Dosiereinrichtung stromaufwärts eines Reduktionskatalysators in ein Abgasrohr eingespritzt.

Die Dosiereinrichtung umfasst unter anderem ein Steuerventil, ein Dosierventil sowie eine Kühleinrichtung. Die Kühleinrichtung ist als ein Kühlmantel ausgeführt. Dieser ist mit dem Kühlwasserkreislauf der Brennkraftmaschine verbunden und sorgt für eine wirkungsvolle Kühlung der Dosiereinrichtung, die im Kraftfahrzeugbetrieb den hohen Temperaturen am Abgasrohr ausgesetzt ist. Der Kühlmantel erlaubt jedoch nur eine partielle Kühlung, wodurch es zu einer nachhaltigen Beschädigung des elektrischen Betätigungsmagneten und/oder des Steckanschlusses kommen kann.

Die EP 2 192 280 A1 betrifft ein Thermo-Management-System für eine Dosiervorrichtung für eine Harnstoffwasserlösung in einem Abgassystem, wobei ein Injektor gekühlt wird. Zu diesem Zweck wird eine Kühlflüssigkeit eingesetzt, die dem Motorkühlkreislauf entnommen wird. Die Kühlflüssigkeit durchströmt den Injektor in Kühlmittelkanälen. Stromabwärts des Injektors wird die Kühlflüssigkeit wieder dem Motorkühlkreislauf zugeführt.

Die DE 101 29 592 A1 offenbart eine Abgabeanordnung für ein Bord-Reduktionsmittel in einem Kraftfahrzeug. Diese umfasst ein Gehäuse, in dem sich eine Pumpe zur Abgabe von Reduktionsmittel befindet. Die Pumpe wird im Betrieb von Druckluft umströmt, wobei Leitbleche die Druckluftströmung um die Pumpe führen. Hierbei erfolgt eine turbulente Verwirbelung der Druckluftströmung. Dies geschieht in einem Bereich unmittelbar stromabwärts vom Drucklufteinlass. Hierdurch wird die Kühlwirkung der Druckluft auf die umströmten Komponenten erhöht und zudem eine Temperierung des einzuspritzenden Reduktionsmittels erreicht. Eine aktive Wasserkühlung ist bei dieser Abgasanordnung nicht vorgesehen.

Die EP 2 503 122 A1 (Stand der Technik nach Artikel 54(3) EPÜ) zeigt eine Pumpvorrichtung mit verbesserter Kühlung.

Aufgabe der Erfindung ist es, ein vollständig wassergekühltes Dosiermodul zu schaffen, das auch hohen Temperaturen im Bereich eines Abgasrohrs einer selbstzündenden Brennkraftmaschine dauerhaft zu widerstehen vermag.

### Offenbarung der Erfindung

Es wird ein Dosiermodul zum Eindüsen eines Reduktionsmittels, insbesondere einer Harnstoff-Wasserlösung, in ein Abgasrohr einer Brennkraftmaschine, insbesondere einer selbstzündenden Brennkraftmaschine, zur Verminderung von Stickoxiden im Abgasstrom, offenbart, wobei das Dosiermodul einen Basiskühlkörper aufweist, der von einem Kühlfluid zum Kühlen eines Einspritzventils für das Reduktionsmittel durchströmt ist. Erfindungsgemäß ist ein gleichfalls vom Kühlfluid durchsetzter Zusatzkühlkörper, zur Kühlung im Bereich eines elektrischen Steckanschlusses und eines Elektromagneten zur Betätigung des Einspritzventils, auf den Basiskühlkörper aufgesetzt, wobei im Basiskühlkörper ein Leiteinsatz für das Kühlfluid angeordnet ist.

Durch den Leiteinsatz ergibt sich eine optimierte Kühlung eines direkt mit dem Abgas in Kontakt kommenden Endabschnittes des Einspritzventils, in dem auch eine Austrittsöffnung für das Reduktionsmittel lokalisiert ist. Hierdurch ist auch bei Umgebungstemperaturen von 160 °C oder darüber ein dauerhaft störungsfreier Betrieb des Dosiermoduls gewährleistet. In Verbindung mit dem, auf den Basiskühlkörper aufgesetzten, Zusatzkühlkörper ist eine aktive Kühlung der nicht mit dem Abgas in Kontakt kommenden (oberen), in der Regel kühleren Baugruppen des Dosiermoduls, insbesondere des Elektromagneten zur Betätigung des Einspritzventils, der elektrischen Steckverbindung sowie der Reduktionsmittelzuführung, gegeben.

Eine Ausgestaltung des Dosiermoduls sieht vor, dass der Leiteinsatz einen im Wesentlichen u-förmigen Strömungsverlauf des Kühlfluides im Bereich eines Endabschnittes des Einspritzventils bewirkt.

Hierdurch wird zunächst vorrangig der besonders heiße - mit dem Abgas in direkten Kontakt kommende - untere Endabschnitt des Einspritzventils vom Kühlfluid umspült, während die etwas kühleren Zonen des Dosiermoduls, insbesondere der Elektromagnet, die Steckverbindung sowie die Reduktionsmittelzuführung erst nachrangig vom Kühlfluid durchflossen und gekühlt werden.

Bei einer weiteren Ausgestaltung des Dosiermoduls ist vorgesehen, dass im Bereich des Basiskühlkörpers ein Einlassstutzen und im Bereich des Zusatzkühlkörpers ein Auslassstutzen für das Kühlfluid angeordnet ist.

Hierdurch wird das Kühlwasser dem Dosiermodul in einer Zone besonders hoher Temperatur zugeführt, während die Abfuhr des erhitzten Kühlfluids in einer etwas kühleren Zone des Dosiermoduls erfolgt.

Nach Maßgabe einer Weiterbildung des Dosiermoduls sind der Einlassstutzen und der Auslassstutzen an einen Kühlkreislauf der Brennkraftmaschine anschließbar und das Dosiermodul ist dazu ausgebildet, dass Kühlwasser der Brennkraftmaschine als Kühlmittel dient.

Hierdurch kann der vorhandene Kühlkreislauf der Brennkraftmaschine auf einfache Art und Weise zur Temperierung des Dosiermoduls mit benutzt werden.

Gemäß einer weiteren vorteilhaften Ausgestaltung weist der Leiteinsatz einen umlaufenden Flansch mit einem Schaft auf, der in einen ersten Verjüngungsabschnitt übergeht.

Der Flansch erlaubt zusammen mit dem Schaft eine einfache konstruktive Integration in eine Kühleinrichtung, insbesondere einen Kühlkörper, des Dosiermoduls. Der Schaft des Leiteinsatzes ist im Wesentlichen hohlzylindrisch ausgebildet, wohingegen der erste Verjüngungsabschnitt eine leicht konische Gestalt aufweist.

Bei einer weiteren Ausgestaltung des Dosiermoduls schließt sich an den ersten Verjüngungsabschnitt ein Mittelabschnitt an, der in einen zweiten Verjüngungsabschnitt mit mindestens zwei Ausnehmungen übergeht.

Infolge der untenliegenden Ausnehmungen im zweiten Verjüngungsabschnitt wird das Kühlwasser zunächst an den besonders heißen, abgasseitigen Endabschnitt des Einspritzventils herangeführt und gelangt erst nach dem Durchströmen desselben in die kühleren Zonen im Bereich des Zusatzkühlkörpers. Ein Mittelabschnitt des Leiteinsatzes weist eine ungefähr hohlzylindrische Formgebung auf, um die u-förmige Umströmung des vom Basiskühlköper radial umgebenen Endabschnittes des Einspritzventils zu bewirken. Eine hiervon abweichende Formgebung des Mittelabschnittes ist - in Abhängigkeit von den Einbauverhältnissen - gleichfalls möglich.

Bei einer Weiterbildung des Dosiermoduls ist ein unterer Rand des Leiteinsatzes von den mindestens zwei Ausnehmungen kronenartig durchsetzt.

Hierdurch wird die Ausbildung von Bereichen im Kühlkörper vermieden, in denen nur eine geringfügige Strömungsgeschwindigkeit des Kühlfluides vorherrscht. Die bevorzugt mindestens sechs im Bereich des zweiten (unteren) Verjüngungsabschnitts angeordneten Ausnehmungen weisen jeweils eine Geometrie auf, die ungefähr der eines geteilten Ovals oder der eines Halbkreises entspricht.

Eine weitere Ausgestaltung sieht vor, dass zwischen dem Basiskühlkörper und dem Zusatzkühlkörper mindestens eine Drainageöffnung vorgesehen ist.

Durch diese Öffnung wird insbesondere der Elektromagnet des Einspritzventils vor etwaig von außen eingedrungenem Spritzwasser geschützt, das ansonsten nicht kontrolliert abfließen könnte. Die Öffnung begrenzt dabei eine Höhe, bis zu der eingedrungenes Wasser - ohne die Gefahr einer dauerhaften Beschädigung des Ventils - höchstens ansteigen kann. Eine Weiterbildung des Dosiermoduls sieht vor, dass der Leiteinsatz mit einem metallischen Material, insbesondere mit Blech, gebildet ist.

Hierdurch ist eine einfache und vor allem großserientaugliche Fertigung mittels bekannter Herstellungsverfahren und -maschinen möglich. Darüber hinaus gewährleistet das metallische Material eine hinreichende Temperaturbeständigkeit. Gegebenenfalls kann anstelle eines metallischen Materials auch ein thermisch hinreichend belastbarer, gegebenenfalls mit Verstärkungsfasern armierter duroplastischer oder thermoplastischer Hochleistungskunststoff zum Einsatz kommen.

### Kurze Beschreibung der Zeichnungen

Anhand der Zeichnung soll die Erfindung nachstehend eingehender beschrieben werden.

Es zeigt:
- Figur 1: eine schematische perspektivische Darstellung eines wassergekühlten Dosiermoduls,
- Figur 2: eine isometrische Seitenansicht eines Leiteinsatzes,
- Figur 3: eine isometrische Ansicht eines erfindungsgemäßen Leiteinsatzes schräg von oben,
- Figur 4: einen vereinfachten Querschnitt durch den abgasnäheren (unteren) Basiskühlkörper des Dosiermoduls entlang der Schnittlinie IV-IV in Figur 1,
- Figur 5: einen vollständigen Längsschnitt durch das wassergekühlte Dosiermodul, und
- Figur 6: eine vergrößerte Darstellung des Ausschnittes VI in Figur 5.

### Ausführungsformen der Erfindung

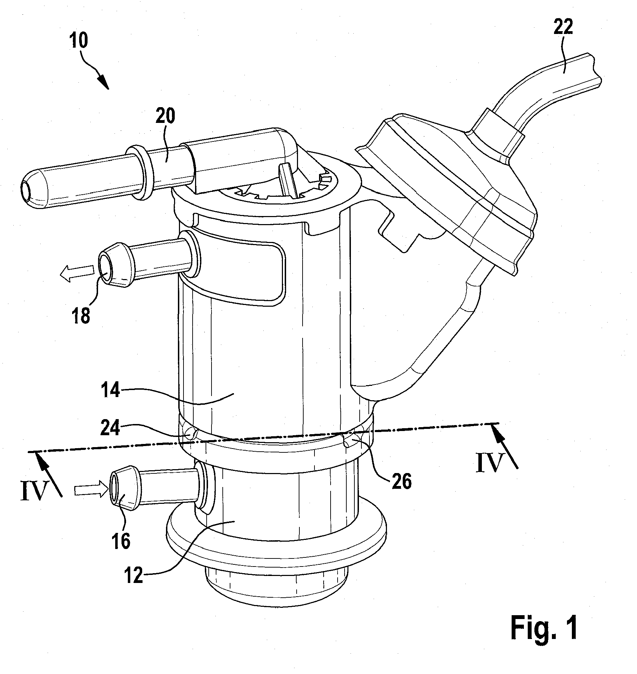

Die Figur 1 zeigt eine prinzipielle Darstellung eines erfindungsgemäßen, wassergekühlten Dosiermoduls zum Einspritzen eines Reduktionsmittels in einen Abgasstrom einer selbstzündenden Brennkraftmaschine.
Ein Dosiermodul 10 umfasst unter anderem einen Basiskühlkörper 12 auf den ein Zusatzkühlkörper 14 aufgesetzt ist. Der Basiskühlkörper 12 verfügt über einen rohrförmigen Einlassstutzen 16 für die Zuführung eines Kühlfluides, bei dem es sich bevorzugt um Kühlwasser aus einem Kühlkreislauf einer hier nicht dargestellten, selbstzündenden Brennkraftmaschine handelt. Weiterhin ist der Zusatzkühlkörper 14 mit einem Auslassstutzen 18 für die Ableitung des zugeführten Kühlwassers versehen. Ausgehend vom Einlassstutzen 16 strömt das Kühlwasser zunächst durch den Basiskühlkörper 12 hindurch und gelangt von dort in den Zusatzkühlkörper 14 und verlässt diesen wieder über den Auslassstutzen 18. Das Kühlwasser strömt entgegen zu dem im Dosiermodul 10 vorherrschenden Temperaturverlauf (Temperaturgradient) vom heißeren Basiskühlkörper 12 in den im Vergleich hierzu kälteren Zusatzkühlkörper 14. Der Basiskühlkörper 12 und der aufgesetzte Zusatzkühlkörper 14 sind hier als mindestens zweigeteilte, vom Kühlwasser durchströmbare Kühlmäntel aus einem umgeformten Blech geeigneter Materialstärke ausgebildet. Die innen hohlen Kühlkörper 12,14 mit einer jeweils ungefähr zylindrischen Außengeometrie stellen sicher, dass das Dosiermodul 10 auch bei Umgebungstemperaturen im Bereich von 160 °C oder höher- wie sie im Bereich eines Abgasstroms bzw. in der Nähe eines Abgasrohrs einer Brennkraftmaschine leicht auftreten - dauerhaft und zuverlässig betrieben werden kann.

Daneben sind eine Zuführung 20 für das Reduktionsmittel sowie ein elektrischer Steckanschluss 22 oberseitig mit dem Zusatzkühlkörper 14 verbunden. Über die Zuführung 20 wird das Dosiermodul 10 mit einem geeigneten Reduktionsmittel, insbesondere einer wässrigen Harnstoff-Wasserlösung (s.g. AdBlue^{®}) versorgt. Das Reduktionsmittel wird mithilfe einer Pumpe aus einem Vorratstank in eine nicht dargestellte Verbindungsleitung gefördert, die an die Zuführung 20 angeschlossen ist. Mittels des Dosiermoduls 10 wird das Reduktionsmittel zeitlich intermittierend in exakt dosierter Menge in ein gleichfalls nicht dargestelltes Abgasrohr der Brennkraftmaschine eingespritzt. Das Einspritzen des Reduktionsmittels mit Hilfe des Dosiermoduls 10 erfolgt dabei stromaufwärts vor einem für den Ablauf der chemischen Reaktionsprozesse beim SCR-Verfahren notwendigen Reduktionskatalysator. Zwischen dem Basiskühlkörper 12 und dem Zusatzkühlkörper 14 befinden sich kleine Drainageöffnungen, von denen zwei vordere sichtbar sind und hier die Bezugsziffern 24 und 26 tragen.

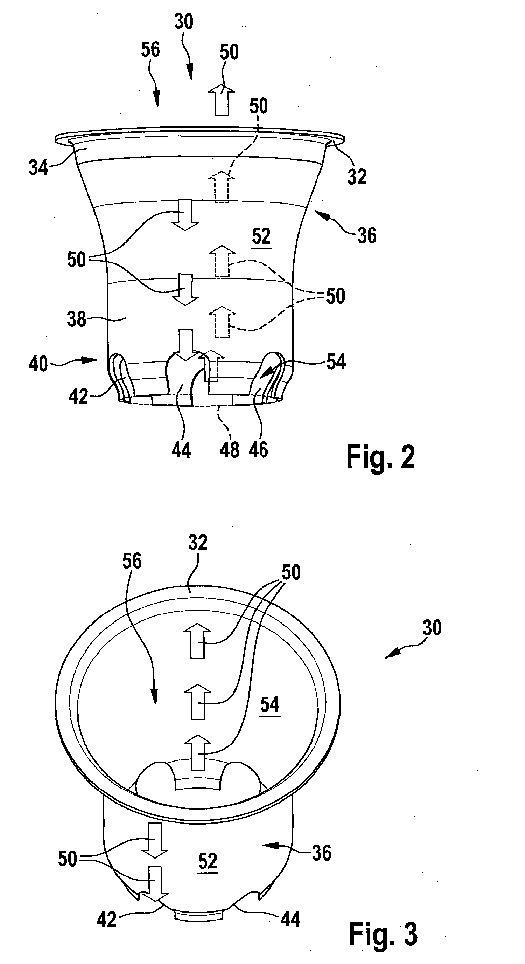

Die Figuren 2 und 3, auf die im weiteren Fortgang der Beschreibung zugleich Bezug genommen wird, zeigen einen erfindungsgemäßen (Kühlwasser-)Leiteinsatz in einer perspektivischen Seitenansicht sowie in einer isometrischen Darstellung schräg von oben. Ein im Wesentlichen rohrförmiger Leiteinsatz 30 für das Kühlwasser umfasst unter anderem einen kreisringförmigen Flansch 32, der sich nach unten hin in einen hohlzylindrischen Schaft 34 fortsetzt. Durch den Schaft 34 wird unter anderem eine Zentrierung des Leiteinsatzes 30 innerhalb des unteren Kühlkörpers erleichtert. Der Schaft 34 geht in einen leicht konischen ersten Verjüngungsabschnitt 36 über, an den sich ein im Wesentlichen hohlzylindrischer Mittelabschnitt 38 anschließt. Abweichend von der gezeigten hohlzylindrischen Gestalt des Mittelabschnittes 38 kann dieser, insbesondere in Abhängigkeit von den geometrischen Verhältnissen des Basiskühlkörpers, eine abweichende Raumform aufweisen. An den Mittelabschnitt 38 grenzt ein zweiter Verjüngungsabschnitt 40 an. In den Verjüngungsabschnitt 40 sind im gezeigten Ausführungsbeispiel insgesamt sechs Ausnehmungen eingebracht, von denen lediglich drei vordere Ausnehmungen 42,44,46 mit Bezugsziffern versehen sind. Die Ausnehmungen durchsetzen bzw. durchbrechen einen (unteren) Rand 48 des Leiteinsatzes 30, d.h. die Ausnehmungen sind nach unten hin offen. Hierdurch wird unter anderem die Entstehung von Raumbereichen innerhalb der Kühlkörper vermieden, in denen eine Strömungsgeschwindigkeit des Kühlwassers auf einen sehr geringen Wert oder bis auf null absinkt.
Die Ausnehmungen weisen hier eine geometrische Form auf, die näherungsweise der eines in etwa hälftig geteilten Ovals entspricht und sind bevorzugt gleichmäßig über den Umfang des zweiten Verjüngungsabschnitts 40 hinweg verteilt in diesen eingebracht. Eine alternative geometrische Ausgestaltung, wie zum Beispiel halbkreisförmige Ausnehmungen, ist gleichfalls möglich. Darüber hinaus kann eine abweichende Anzahl von gegebenenfalls zusätzlich ungleich über den Umfang hinweg verteilten Ausnehmungen vorgesehen sein. Eine Anzahl und/oder eine Querschnittsfläche der Ausnehmungen ist so bemessen, dass unter allen Betriebszuständen der Brennkraftmaschine ein für die Kühlung des Dosiermoduls optimaler Kühlwasserdurchtritt sichergestellt ist.
Im Betrieb des Dosiermoduls ergibt sich ein Strömungsverlauf 50 des Kühlwassers, der zunächst parallel zu einer Außenfläche 52 des Leiteinsatzes 30 verläuft, der dann durch die sechs Ausnehmungen hindurch tritt und der schließlich parallel zu einer Innenfläche 54 des Leiteinsatzes 30, durch eine zentrale Öffnung 56 des Leiteinsatzes 30 wieder zurück verläuft.

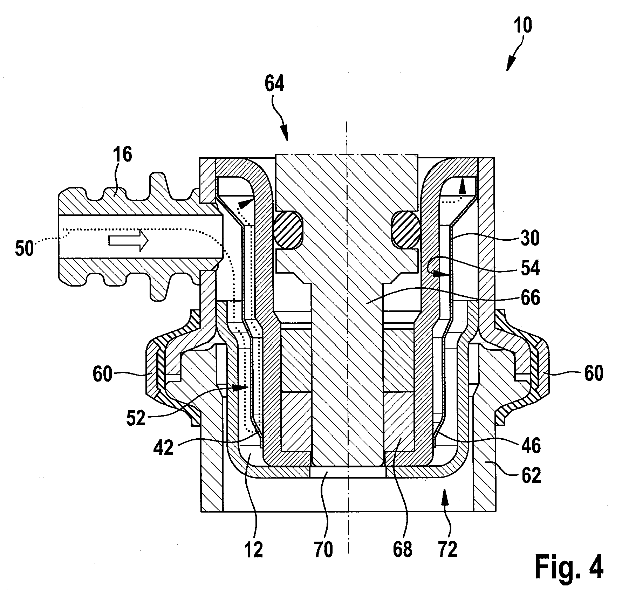

Die Figur 4 illustriert einen vereinfachten (Teil-)Querschnitt durch den abgasnäheren (unteren) Basiskühlkörper des Dosiermoduls entlang der Schnittlinie IV-IV in Figur 1.
Das Dosiermodul 10 ist mittels einer Klemmschelle 60 auf einem Abgasrohrstutzen 62 eines nicht näher dargestellten Abgasrohrs der Brennkraftmaschine befestigt. Ein innerhalb des Dosiermoduls 10 angeordnetes Einspritzventil 64 umfasst unter anderem eine Ventilnadel 66, die in einer Führung 68 vertikal verschiebbar aufgenommen ist. Mittels der Ventilnadel 66 kann eine Austrittsöffnung 70 intermittierend geöffnet und geschlossen werden, um das Eindüsen einer exakt definierten Menge des Reduktionsmittels zu ermöglichen. Die vertikale Verschiebung der Ventilnadel 66 erfolgt mittels eines in der Figur 4 nicht dargestellten Elektromagneten. Die Führung 68, eine nicht bezeichnete untere Spitze der Ventilnadel 66 sowie die Austrittsöffnung 70 für das Reduktionsmittel sind in einem Endabschnitt 72 des Einspritzventils 64 lokalisiert, der in unmittelbaren Kontakt mit dem Abgasstrom der Brennkraftmaschine kommt und demzufolge sehr hohen Temperaturen ausgesetzt ist.
Das Kühlwasser aus dem Kühlkreislauf der Brennkraftmaschine gelangt durch den Einlassstutzen 16 in den Basiskühlkörper 12 und wird durch die Wirkung des Leiteinsatzes 30 in Richtung des mit einer punktierten Linie angedeuteten, näherungsweise U-förmigen Strömungsverlaufs 50 um den besonders heißen Endabschnitt 72 der Einspritzdüse 64 herumgeführt. Hierdurch erfolgt erfindungsgemäß die vorrangige Kühlung des hohen Temperaturen ausgesetzten Endabschnitts 72 der Einspritzdüse 64, so dass das Dosiermodul 10 auch bei Umgebungstemperaturen von 160 °C oder darüber zuverlässig funktioniert. Das Kühlwasser strömt hierbei zunächst entlang der Außenfläche 52 des Leiteinsatzes 30, strömt durch die untenliegenden Ausnehmungen 42,46 des Leiteinsatzes 30 und gelangt dann auf dessen Innenfläche 54 zurück, weiter nach oben zu den in Figur 4 nicht näher dargestellten, kühleren Baugruppen des Dosiermoduls 10 im Bereich des auf den Basiskühlkörper 12 aufgesetzten, hier jedoch nicht eingezeichneten Zusatzkühlkörper.

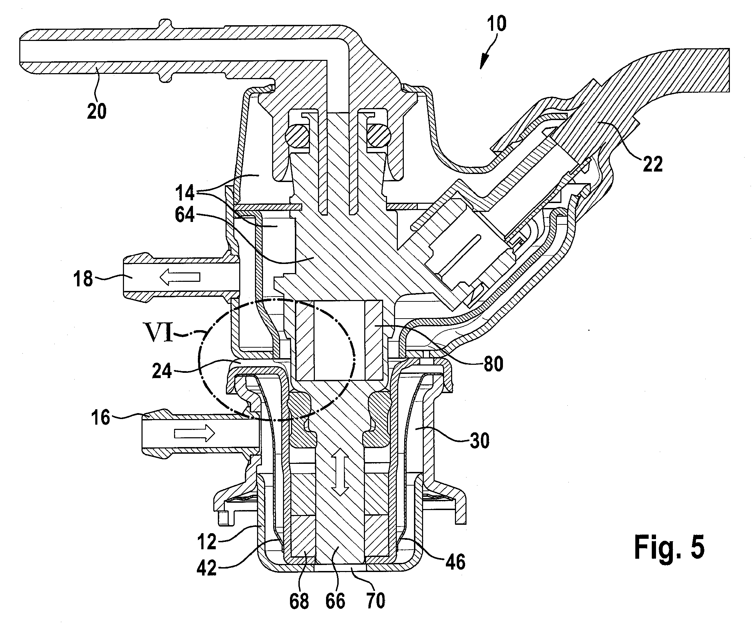

Die Figur 5 illustriert einen vollständigen Längsschnitt durch das wassergekühlte Dosiermodul.

Das Dosiermodul 10 ist mittels des Einlassstutzens 16 und des Auslassstutzens 18 in den nicht dargestellten Kühlkreislauf der Brennkraftmaschine ein geschleift. Der Einlassstutzen 16 ist am Basiskühlkörper 12 angebracht, während der Auslassstutzen 18 mit dem Zusatzkühlkörper 14 in einer hydraulischen Verbindung steht. Die Zufuhr des Reduktionsmittels erfolgt über die Zuführung 20, während die Versorgung des Dosiermoduls 10 mit elektrischer Energie über den wasserdichten Steckanschluss 22 erfolgt. Der Leiteinsatz 30 mit den Ausnehmungen 42,46 ist im Basiskühlkörper 12 aufgenommen. Mittels eines Elektromagneten 80 kann die Ventilnadel 66 in der Führung 68 vertikal auf und ab bewegt werden, um das intermittierende Öffnen und Verschließen der Austrittsöffnung 70 des Einspritzventils 64 zu realisieren. Die Ansteuerung des Elektromagneten 80 und damit der Ventilnadel 66 erfolgt mittels eines nicht dargestellten elektronischen Steuer- und/oder Regelgerätes in Abhängigkeit vom Betriebszustand der selbstzündenden Brennkraftmaschine. Durch die Drainageöffnung 24 wird verhindert, dass von außen eindringendes Spritzwasser dauerhaft, insbesondere im Bereich des mit einer elektrischen Isolierung eingekapselten Elektromagneten 80 zurückbleiben kann.

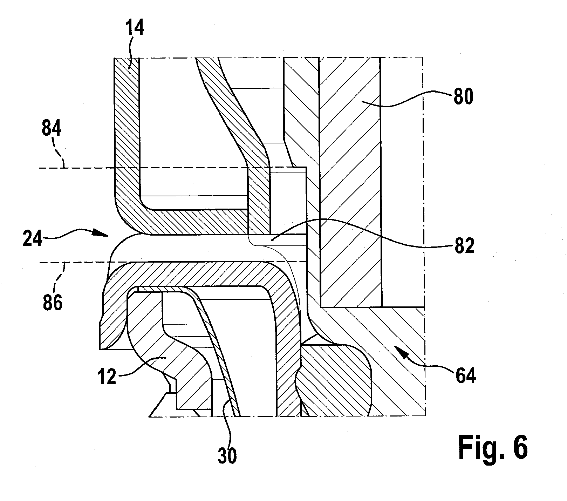

Die Figur 6 zeigt eine vergrößerte Darstellung des Ausschnittes VI aus der Figur 5. Zwischen dem Basiskühlkörper 12 mit dem Leiteinsatz 30 und dem aufgesetzten Zusatzkühlkörper 14 befindet sich die Drainageöffnung 24. Durch die Drainageöffnung 24 wird unter anderem erreicht, dass von außen in das Dosiermodul eindringendes Spritzwasser 82 allenfalls temporär bis zu einem Maximalpegel 84 ansteigen kann. Bei einer Überschreitung des Maximalpegels 84 könnte es ansonsten zu einer dauerhaften Beschädigung des Einspritzventils 64 bzw. des eingekapselten Elektromagneten 80 innerhalb des Dosiermoduls kommen. Statisch kann das Spritzwasser 82 einen Minimalpegel 86 nicht überschreiten.

## Patentansprüche

1. Dosiermodul (10) zum Eindüsen eines Reduktionsmittels, insbesondere einer Harnstoff-Wasserlösung, in ein Abgasrohr einer Brennkraftmaschine, insbesondere einer selbstzündenden Brennkraftmaschine, zur Verminderung von Stickoxiden im Abgasstrom, wobei das Dosiermodul einen Basiskühlkörper (12) aufweist, der von einem Kühlfluid zum Kühlen eines Einspritzventils (64) für das Reduktionsmittel durchströmt ist, **dadurch gekennzeichnet, dass** ein gleichfalls vom Kühlfluid durchsetzter Zusatzkühlkörper (14), welcher zur Kühlung im Bereich eines elektrischen Steckanschlusses (22) und eines Elektromagneten (80) zur Betätigung des Einspritzventils (64) eingerichtet ist, auf den Basiskühlkörper (12) aufgesetzt ist, wobei im Basiskühlkörper (12) ein Leiteinsatz (30) für das Kühlfluid angeordnet ist.

2. Dosiermodul (10) nach Anspruch 1, wobei der Leiteinsatz (30) einen im Wesentlichen u-förmigen Strömungsverlauf (50) des Kühlfluides im Bereich eines Endabschnittes (72) des Einspritzventils (64) bewirkt.

3. Dosiermodul (10) nach Anspruch 1 oder 2, wobei im Bereich des Basiskühlkörpers (12) ein Einlassstutzen (16) und im Bereich des Zusatzkühlkörpers (14) ein Auslassstutzen (18) für das Kühlfluid angeordnet ist.

4. Dosiermodul (10) nach einem der Ansprüche 1 bis 3, wobei der Einlassstutzen (16) und der Auslassstutzen (18) an einen Kühlkreislauf der Brennkraftmaschine anschließbar sind und das Dosiermodul dazu ausgebildet ist, dass der Brennkraftmaschine als Kühlfluid dient.

5. Dosiermodul (10) nach einem der Ansprüche 1 bis 4, wobei der Leiteinsatz (30) einen umlaufenden Flansch (32) mit einem Schaft (34) aufweist, der in einen ersten Verjüngungsabschnitt (36) übergeht.

6. Dosiermodul (10) nach Anspruch 5, wobei sich an den ersten Verjüngungsabschnitt (36) ein Mittelabschnitt (38) anschließt, der in einen zweiten Verjüngungsabschnitt (40) mit mindestens zwei Ausnehmungen (42-46) übergeht.

7. Dosiermodul (10) nach Anspruch 6, wobei ein unterer Rand (48) des Leiteinsatzes (30) von den mindestens zwei Ausnehmungen (42-46) kronenartig durchsetzt ist.

8. Dosiermodul (10) nach einem der Ansprüche 1 bis 7, wobei zwischen dem Basiskühlkörper (12) und dem Zusatzkühlkörper (14) mindestens eine Drainageöffnung (24, 26) vorgesehen ist.

9. Dosiermodul (10) nach einem der Ansprüche 1 bis 8, wobei der Leiteinsatz (30) mit einem metallischen Material, insbesondere mit Blech, gebildet ist.

## Claims

1. Dosing module (10) for injecting a reduction agent, in particular a urea-water solution, into an exhaust pipe of an internal combustion engine, in particular of a self-ignition internal combustion engine, to reduce nitrogen oxides in the exhaust stream, wherein the dosing module has a main cooling element (12), through which a cooling fluid flows for cooling an injection valve (64) for the reduction agent, **characterized in that** an additional cooling element (14), through which the cooling fluid likewise passes and which is set up for cooling in the region of an electrical plug connection (22) and of an electromagnet (80) for actuating the injection valve (64), is mounted on the main cooling element (12), wherein a guide insert (30) for the cooling fluid is arranged in the main cooling element (12).

2. Dosing module (10) according to Claim 1, wherein the guide insert (30) brings about a substantially u-shaped flow profile (50) of the cooling fluid in the region of an end section (72) of the injection valve (64).

3. Dosing module (10) according to Claim 1 or 2, wherein an inlet stub (16) for the cooling fluid is arranged in the region of the main cooling element (12), and an outlet stub (18) for the cooling fluid is arranged in the region of the additional cooling element (14).

4. Dosing module (10) according to one of Claims 1 to 3, wherein the inlet stub (16) and the outlet stub (18) can be connected to a cooling circuit of the internal combustion engine, and the dosing module is designed such that cooling water from the internal combustion engine is used as a cooling fluid.

5. Dosing module (10) according to one of Claims 1 to 4, wherein the guide insert (30) has an encircling flange (32) having a stem (34) which merges into a first tapering section (36).

6. Dosing module (10) according to Claim 5, wherein the first tapering section (36) is adjoined by a central section (38), which merges into a second tapering section (40) having at least two apertures (42-46).

7. Dosing module (10) according to Claim 6, wherein a lower rim (48) of the guide insert (30) is penetrated by the at least two apertures (42-46) so as to resemble a crown.

8. Dosing module (10) according to one of Claims 1 to 7, wherein at least one drainage opening (24, 26) is provided between the main cooling element (12) and the additional cooling element (14).

9. Dosing module (10) according to one of Claims 1 to 8, wherein the guide insert (30) is formed by a metal material, in particular by sheet metal.

## Revendications

1. Module de dosage (10) pour l'injection d'un agent réducteur, en particulier une solution d'urée aqueuse, dans un tuyau d'échappement d'un moteur à combustion interne, en particulier un moteur à combustion interne à auto-allumage, pour réduire les oxydes d'azote dans le flux de gaz d'échappement, le module de dosage présentant un corps de refroidissement de base (12) qui est parcouru par un fluide de refroidissement pour refroidir une soupape d'injection (64) pour l'agent réducteur, **caractérisé en ce qu'**un corps de refroidissement supplémentaire (14) également parcouru par du fluide de refroidissement, qui est prévu pour assurer le refroidissement dans la région d'un raccord électrique enfichable (22) et d'un électroaimant (80) pour l'actionnement de la soupape d'injection (64), est disposé sur le corps de refroidissement de base (12), un insert de guidage (30) pour le fluide de refroidissement étant disposé dans le corps de refroidissement de base (12).

2. Module de dosage (10) selon la revendication 1, dans lequel l'insert de guidage (30) crée une allure essentiellement en forme de U (50) de l'écoulement du fluide de refroidissement dans la région d'une portion d'extrémité (72) de la soupape d'injection (64).

3. Module de dosage (10) selon la revendication 1 ou 2, dans lequel, dans la région du corps de refroidissement de base (12), est disposée une tubulure d'admission (16) pour le flux de refroidissement, et dans la région du corps de refroidissement supplémentaire (14), est disposée une tubulure d'échappement (18) pour le fluide de refroidissement.

4. Module de dosage (10) selon l'une quelconque des revendications 1 à 3, dans lequel la tubulure d'admission (16) et la tubulure d'échappement (18) peuvent être raccordés à un circuit de refroidissement du moteur à combustion interne et le module de dosage est réalisé de manière à ce que l'eau de refroidissement du moteur à combustion interne serve de fluide de refroidissement.

5. Module de dosage (10) selon l'une quelconque des revendications 1 à 4, dans lequel l'insert de guidage (30) présente une bride périphérique (32) avec un tronc (34) qui se prolonge par une première portion rétrécie (36).

6. Module de dosage (10) selon la revendication 5, dans laquelle une portion centrale (38) se raccorde à la première portion rétrécie (36), laquelle se prolonge par une deuxième portion rétrécie (40) avec au moins deux évidements (42-46).

7. Module de dosage (10) selon la revendication 6, dans lequel un bord inférieur (48) de l'insert de guidage (30) est traversé en forme de couronne par les au moins deux évidements (42-46).

8. Module de dosage (10) selon l'une quelconque des revendications 1 à 7, dans lequel, entre le corps de refroidissement de base (12) et le corps de refroidissement supplémentaire (14), est prévue au moins une ouverture de drainage (24, 26).

9. Module de dosage (10) selon l'une quelconque des revendications 1 à 8, dans lequel l'insert de guidage (30) est formé en un matériau métallique, en particulier en tôle.
